(19) Europäisches Patentamt

European Patent Office

Office européen des brevets

(11) Publication number: **0 295 623 B1**

# (12) EUROPEAN PATENT SPECIFICATION

(45) Date of publication of patent specification: **15.01.92**    (51) Int. Cl.⁵: **G01F 1/20**

(21) Application number: **88109456.9**

(22) Date of filing: **14.06.88**

(54) **Fluidic flowmeter.**

(30) Priority: **16.06.87 JP 149492/87**
**06.11.87 JP 170206/87 U**
**07.11.87 JP 170199/87 U**
**09.11.87 JP 171817/87 U**
**03.03.88 JP 50886/88**

(43) Date of publication of application:
**21.12.88 Bulletin  88/51**

(45) Publication of the grant of the patent:
**15.01.92 Bulletin  92/03**

(84) Designated Contracting States:
**DE FR GB**

(56) References cited:
**JP-A-62 108 115**
**US-A- 4 550 614**
**US-A- 4 610 162**

(73) Proprietor: **OSAKA GAS CO., LTD**
**1 Hiranomachi 5-chome, Higashi-ku**
**Osaka-shi, Osaka, 541(JP)**

(72) Inventor: **Okabayashi, Makoto c/o Osaka Gas**
**Co., Ltd.**
**1-banchi, 5-chome, Hirano-machi**
**Higashi-ku Osaka(JP)**

(74) Representative: **Schulze Horn, Stefan,**
**Dipl.-Ing. M.Sc.**
**Goldstrasse 36**
**W-4400 Münster(DE)**

## Description

### 1) FIELD OF THE INVENTION

The present invention relates to a fluidic flowmeter operating on the Coanda principle comprising:
a reduced pipe portion, a discharge nozzle and an enlarged pipe portion disposed in series in said order in a fluid flow direction;
a pair of control nozzles formed at the boundary between said discharge nozzle and said enlarged pipe portion and oriented substantially normal to the discharge direction of said discharge nozzle, said control nozzles facing each other;
a pair of return flow passages defined between said respective control nozzles and downstream positions of said enlarged pipe portion;
a target for stabilizing switching of fluid flow direction mounted in said enlarged pipe portion;
a sensor for detecting variations in pressure or flow rate due to a variation in the flow direction of discharged fluid from said discharge nozzle;
a pair of first partition walls mounted in said enlarged pipe portion and a second partition wall mounted to extend across the enlarged pipe portion downstream of said first partition walls, said first and second partition walls and the walls of the enlarged pipe portion together defining said control nozzles and said return flow passages, said second partition wall together with said first partition walls and the walls of said enlarged pipe portion forming discharge passages

### 2) DESCRIPTION OF THE PRIOR ART

Such a conventional flowmeter is disclosed in JP-A-62-108 115, as shown in Fig. 28, comprises a pair of wing-shaped partition walls 28a, 28b for sectioning an enlarged pipe portion 5, control nozzles 6a, 6b and return passages 7a, 7b, and a second partition wall 31 for forming start portions of the return flow passages 7a and 7b together with the first partition walls 28a and 28b and for shutting off a downstream side of the enlarged pipe portion 5. the second partition wall 31 forms a pair of first curved faces 31a and 31b respectively facing the start portions of the return flow passages 7a and 7b and a second curved face 31c facing a target 12 between the first curved faces 31a and 31b. There are disposed discharge passages 10a and 10b at more downstream sides than the first partition walls 28a and 28b in a discharge direction of the discharge nozzle 3. Respective ends of the first curved faces 31a and 31b of the second partition wall 31 are aligned substantially on a same line in the discharge direction of the discharge nozzle 3. More specifically, end portions 31d and 31e of the first curved faces 31a and 31b facing the discharge passages 10a and 10b are disposed more downstream than the first partition walls 28a and 28b in the discharge direction of the discharge nozzle 3. Accordingly, inlet openings of the discharge passages 10a and 10b also are positioned more downstream than the first partition walls 28a and 28b.

Furthermore, the target 12 is disposed at a downstream side apart from the discharge nozzle 3 inside the enlarged pipe portion 5.

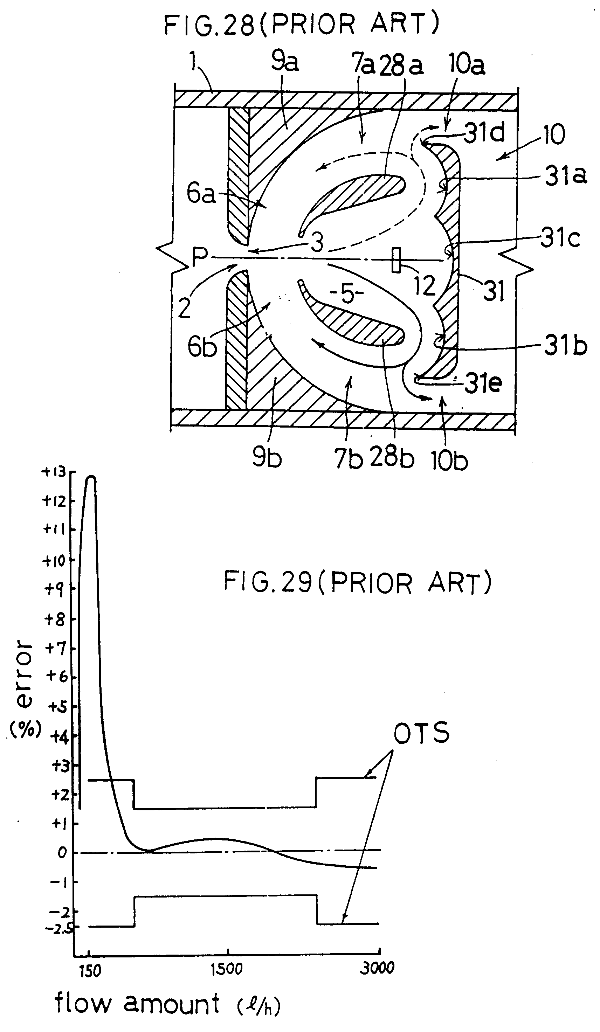

In the above fluidic flowmeter; however, as shown in Fig. 28, there remains the problem to be solved that there occurs a large measurement error especially in measuring a small flow amount if the flow amount measurement is attempted over a larger measuring flow amount range.

US-A-4 610 162 discloses a fluidic flowmeter comprising a combination of an upstream fluidic element and a downstream fluidic element. One of the fluidic elements includes a jet nozzle having a smaller opening area than a jet nozzle of the other. The flowmeter further comprises a bypass passage disposed parallel to the former fluidic element and including valve means, preferably a diaphragm type governor valve. The governor valve includes a main valve member and an auxiliary valve member adapted to open by a fluid pressure upstream thereof when the main valve member is in a closed position. Each of the fluidic elements has a sensor disposed in one of return passages to detect flow rate variations therein. A flow rate indicating device is provided to derive flow rates from signals received from the sensors and indicate the flow rates.

However, this flowmeter is not able to measure the flow as occurring as required.

Taking the above state of the art into consideration, it is the primary object of the present invention to provide a fluidic flowmeter capable of achieving an accurate flow amount measurement irrespectively of flow amount volume over a wide measuring flow amount range through simple and easy improvements in the configuration of the partition wall and in the positioning of the target or the like, the flowmeter being capable of effecting accurate measurement especially in a small flow amount range.

In order to accomplish the above object, a fluidic flowmeter of the above-described type related to the present invention is characterized in that a front face of said target directed towards said discharge nozzle is positioned between a straight line (X) interconnecting center portions of outer peripheral faces of said first partition walls and a straight line (Y) interconnecting leading edges of said first partition walls at the side of said control nozzles, said outer peripheral faces of said first partition walls are formed to be substantially semicylindrical, and the outer edges of first curved faces of said second partition wall helping to define the inlet openings of said discharge passages are extended at least to the locus of a straight line interconnecting between the downstream edges of said first partition walls.

Functions and effects of the above-described construction will be described next.

The inventor conducted experiments for seeking a configuration of the partition walls to be disposed in the flowmeter and positioning of the target optimal for minimizing the flow amount measurement error, and achieved the fluidic flowmeter having the above-described construction.

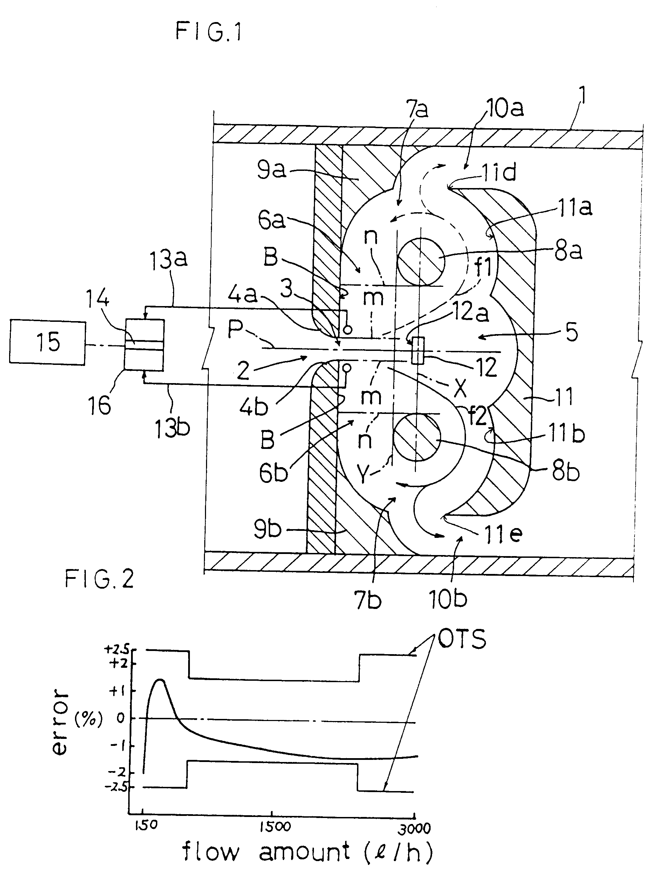

That its, with this fluidic flowmeter, as shown in Fig. 2, an accurate flow amount measurement was achieved with the measurement error of less than ± 2% over the wide measurement range between the maximum flow amount of 3,000ℓ/h and the minimum flow amount of 150 ℓ/h which is only one-twentieth of the maximum amount.

On the other hand, in the case of the prior art flowmeter shown in Fig. 28, the error for the same flow amount range (3,000 to 150 ℓ/h) is larger than 10% at its maximum in the small flow amount range of 150 to 300 ℓ/h as shown in Fig. 29. As being apparent from comparison between Fig. 2 and Fig. 29, according to the present invention, it becomes possible to effect accurate measurement of a small flow amount even if the flow amount measurement range is extended considerably.

As a result, through simple and easy improvements on the partition walls and on the position of the target, the present invention has achieved accurate measurement of small flow amount and consequently has extended the usage and application of the fluidic flowmeter.

Further and other advantages and features of the fluidic flowmeter related to the present invention will become more apparent from the following description with reference to the accompanying drawings.

## BRIEF DESCRIPTION OF THE DRAWINGS

Fig. 1 is a section view showing a preferred embodiment of a fluidic flowmeter related to the present invention,

Fig. 2 is a graph illustrating results of experiments using the fluidic flowmeter of Fig. 1,

Figs. 3 and 4 are section views showing the fluidic flowmeter of Fig. 2 the position of the pressure sensor of which is varied for the purpose of comparison,

Figs. 5 through 7 are graphs illustrating wave-shaped signals obtained when a minute flow amount is measured by respectively using the fluidic flowmeter of Figs. 1, 3 and 4,

Figs. 8 through 10 are graphs illustrating wave-shaped signals obtained when a minute flow amount is measured by respectively using the fluidic flowmeters of Figs. 1, 3 and 4,

Fig. 11 is a section view showing a fluidic flowmeter according to still another embodiment of the present invention,

Fig. 12 is a graph showing results of experiments using the fluidic flowmeter of Fig. 11,

Fig. 13 is a section view showing a fluidic flowmeter according to still another embodiment of the present invention,

Fig. 14 is a section view showing a fluidic flowmeter according to still another embodiment of the present invention,

Fig. 15 is a section view showing a fluidic flowmeter according to still another embodiment of the present invention,

Fig. 16 is a graph illustrating results of experiments using the fluidic flowmeter of Fig. 15,

Fig. 17 is a section view showing a fluidic flowmeter according to still another embodiment of the present invention,

Fig. 18 is a section view showing a fluidic flowmeter according to still another embodiment of the present invention,

Fig. 19 is a section view showing a fluidic flowmeter according to still another embodiment of the present invention,

Fig. 20 is a graph illustrating results of experiments using the fluidic flowmeter of Fig. 19,

Fig. 21 is a section view showing a fluidic flowmeter according to still another embodiment of the present invention,

Fig. 22 is a section view showing a fluidic flowmeter according to still another embodiment of the present invention,

Fig. 23 is a section view showing a fluidic flowmeter according to still another embodiment of the present invention,

Fig. 24 is a view showing a configuration of a target used in the fluidic flowmeter of Fig. 23,

Figs. 25(a), 25(b) and 25(c) are views respectively showing configurations of the target according to further embodiments of the present invention,

Fig. 26 is a graph illustrating results of experiments using a fluidic flowmeter having no communication passage between its second and third partition walls,

Fig. 27 is a graph showing results of experiments using the fluidic flowmeter of Fig. 23,

Fig. 28 is a section view showing a conventional fluidic flowmeter, and

Fig. 29 is a graph showing results of experiments using the fluidic flowmeter of Fig. 28.

DESCRIPTION OF THE PREFERRED EMBODIMENTS

Preferred embodiments of a fluidic flowmeter related to the present invention will be particularly described next with reference to the accompanying drawings.

Referring to Fig. 1, a pair of first flow passage forming members 4a and 4b for forming a reduced pipe portion 2 and a discharge nozzle 3 inside a pipe 1 are disposed symmetrically each other relative to a pipe center axis P, whereby fluid is guided smoothly by the effect of the reduced pipe portion 2 and is discharged through the discharge nozzle 3 in substantially parallel with the pipe center axis P. Further, there are disposed symmetrically each other relative to the pipe center axis P a pair of first partition walls 8a and 8b for sectioning a pair of return passages 7a and 7b communicating a pair of control nozzles 6a and 6b and between a downstream side of an enlarged pipe portion 5 and the respective control nozzles 6a and 6b. Also, the pair of control nozzles 6a and 6b are opposed to each other such that the control nozzles 6a and 6b are oriented substantially normal to the discharge direction of the discharge nozzle 3.

Further, there is provided a second partition wall 11 forming a pair of discharge passages 10a and 10b together with the pair of partition walls 9a and 9b, with the second partition wall 11 shutting off the downstream side of the enlarged pipe portion 5, and with inlet openings of the discharge openings 10a and 10b being communicated respectively with inlet openings of the return passages 7a and 7b.

In operation, when a fluid discharge operation is initiated through the discharge nozzle 3, the discharged fluid is caused by the Coanda effect to flow along one of the first partition wall 8a in a direction denoted by a broken line f1, whereby a considerable fluid energy is applied from the return passage 7a to the control nozzle 6a disposed at the side of this partition wall 8a thereby causing the discharged fluid to flow along the opposite partition wall 8b in a direction denoted by a solid line f2. Then, by the fluid energy from the opposite control nozzle 6b, the discharged fluid is again caused to flow in the direction of the broken line f1 along the partition wall 8a along which the fluid has flown initially. Accordingly, the flow direction of the discharged fluid varies alternately along the partition walls 8a and 8b by a decreasing cycle for an increasing discharge flow amount with the cycle and the flow amount keeping a constant relationship.

The first partition walls 8a and 8b are formed to be substantially cylindrical; and also a target 12 for stabilizing switching of flow direction at the enlarged pipe portion 5 is provided with a face 12a of the target directed towards the discharge nozzle 3 is positioned between a straight line X interconnecting center portions of outer peripheral faces of the first partition walls 8a, 8b and another straight line Y interconnecting leading edges of the first partition walls 8a, 8b at the side of the control nozzle 6a and 6b.

On the other hand, the second partition wall 11 includes a pair of first curved faces 11a and 11b respectively facing starting ends of the pair of return flow passages 7a and 7b and a second curved face 11c facing the target 12 between the first curved faces 11a and 11b, the first and second curved faces 11a, 11b and 11c being formed as partially cylindrical faces concave in the discharge direction of the discharge nozzle 3, central axes of the first curved faces 11a and 11b and of the second curved face 11c being aligned to be substantially in parallel with each other.

Also, ends 11d and 11e of the second partition wall 11 facing the inlet openings of the discharge passages 10a and 10b are extended to a vicinity of a straight line interconnecting between rear ends of the first partition walls 8a and 8b towards the second partition wall 11.

Preferably, the ends 11d and 11e of the second partition wall 11 should further extend to the side of the discharge nozzle 3 over the straight line interconnecting the rear ends of the first partition walls 8a and 8b as long as the predetermined discharge passages may be formed.

With the above-described arrangement, as shown in Fig. 2, it becomes possible; for example, to restrict the error in a flow amount measurement within the Japanese Official Tolerance Standard (to be referred to as OTS hereinafter) for a home-use city-gas meter even if the measurement flow amount range is extended to e.g. 150 to 3,000 ℓ/h required of the city gas home-use gas meter.

Incidentally, the first partition walls 8a and 8b may be formed to be substantially tubular.

Also, the face 12a of the target 12 toward the discharge nozzle 3 may be disposed on the straight lines X and Y.

Further, there is provided a pressure sensor 14 for functioning within an area surrounded by a straight line m passing through an opening end of the discharge nozzle 3 in parallel with a discharge center axis P of the discharge nozzle 3 as being viewed centrally of the first partition walls 8a and 8b, a straight line n in contact with the first partition walls 8a and 8b at the side of the target 12, a straight line Y in contact with the first partition walls 8a and 8b at the side of the discharge nozzle e and by a wall face B continuous with the discharge nozzle 3.

A pair of pipes 13a and 13b independently communicating with the above area are connected to a sealed case 16, such that fluid pressures from the pipes 13a and 13b act in opposite directions on this sensor 14. In operation, this pressure sensor 14 detects a pressure variation resulting from a flow direction variation of the discharged flow from the discharge nozzle 3 and delivers a wave-shaped signal having a sinusoidal curve to a flow amount measuring device 15 which calculates and displays a flow amount value from the frequency of the wave-shaped signal. Needless to say, this pressure sensor may be replaced by a flow amount sensor.

If the pressure sensor 14 is positioned as shown in Fig. 1, this is advantageous in that measurement of a small or large flow amount may be carried out stably with waveshaped signals having a regular shape.

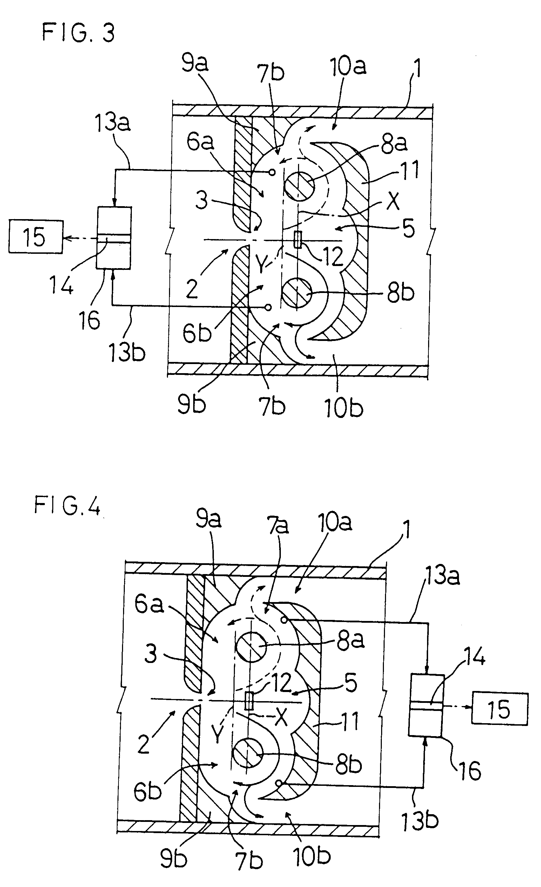

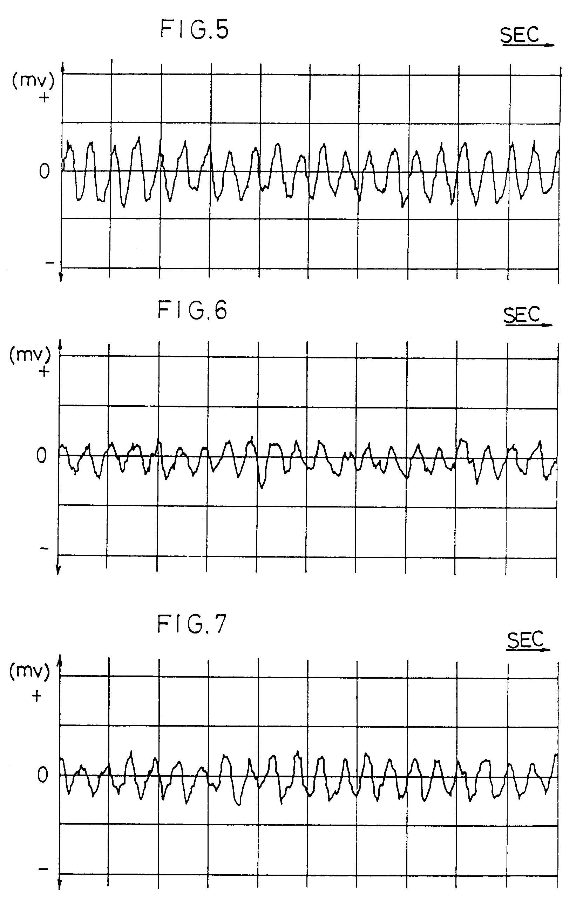

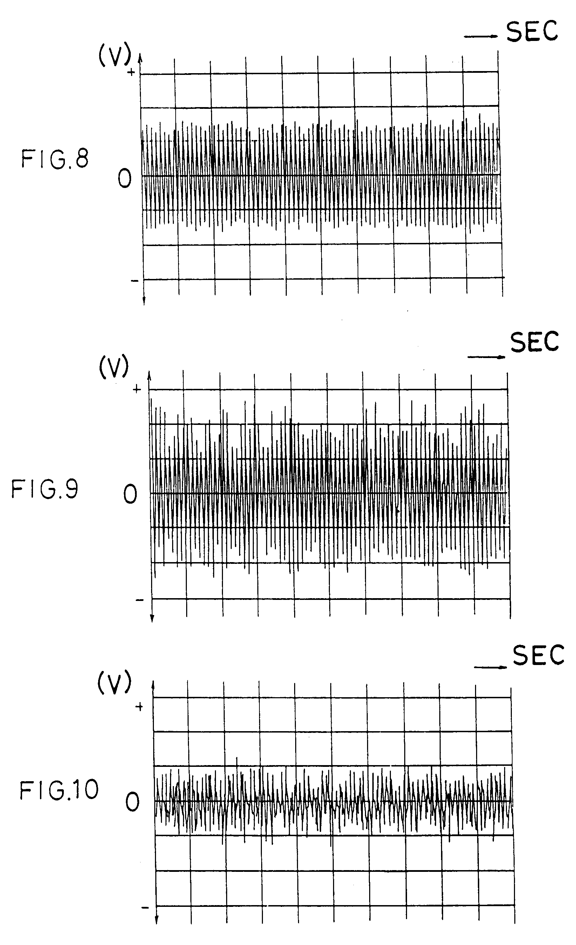

Experiments were conducted with varying the position of the pressure sensor 14 as shown in Figs. 3 and 4, and the results were compared with the arrangement of Fig. 1. Wave-shaped signals from the pressure sensor 14 in these positions shown in Figs. 1, 3 and 4 are illustrated in Figs. 5 through 7 for the small flow amount of measurement and also in Figs. 8 through 10 for the large flow amount measurement.

As being apparent from comparison of Figs. 5 through 10, with the pressure detection range of the present invention shown in Fig. 1, the pressure sensor 14 provide wave-shaped signals having large and regular oscillations in either of the small and large flow amount range, whereby a still more accurate flow amount measurement is possible.

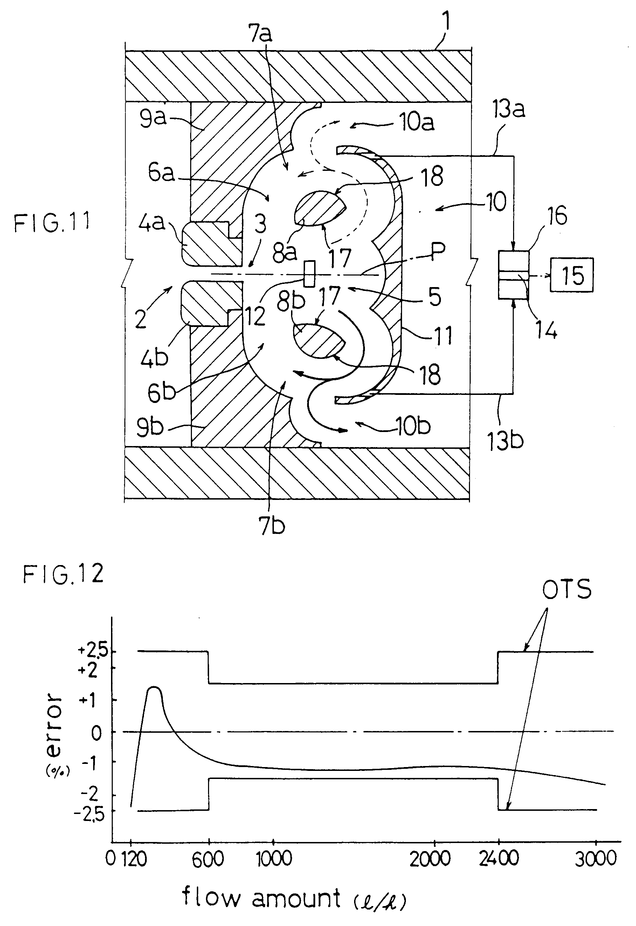

Many variations are possible in the configuration of the first partition walls 8a and 8b in place of the substantially cylindrical configuration shown in Figs. 1, 3 and 4. For example, the first partition walls are also effective if the same have a substantially semicylindrical configuration as shown in Figs. 11, 13 and 14.

More specifically, in Fig. 11, the partition walls 8 and 8b respectively have the substantially semicylindrical outer periphery having a curved face portion 17 with a large curvature radius and another curved face portion 18 with a small curvature radius. And, the large-curvature-radius curved face portion 17 is disposed adjacent the enlarged pipe portion 5; whereas, the small-curvature-radius curved face portion 18 is disposed adjacent the return passages 7a, 7b and the control nozzles 6a and 6b. The target 12 for stabilizing the switching of flow direction at the enlarged pipe portion 5 is disposed between the partition walls 8a and 8b.

With the above-described arrangement, as shown in Fig. 12, it becomes possible; for example, to restrict the error in a flow amount measurement within the OTS of ±2.5% for a home-use city-gas meter even if the measurement flow amount range is extended to e.g. 120 to 3,000 ℓ/h required of the gas meter of this type.

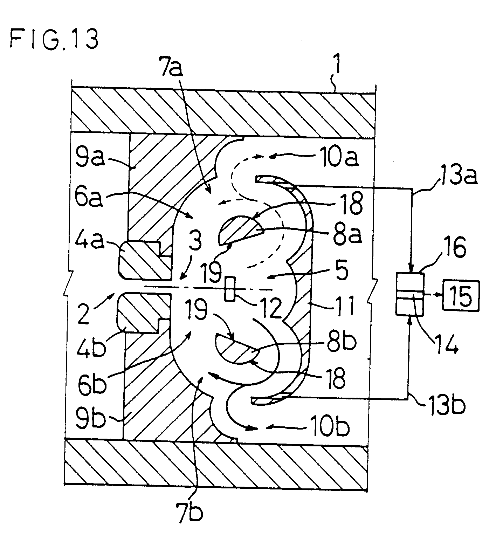

The outer peripheral faces of the partition walls 8a and 8b may be formed, as shown in Fig. 13, by a flat face portion 19 facing the enlarged pipe portion 5 and by the curved face portion 18 facing the return passages 7a and 7b and the control nozzles 6a and 6b.

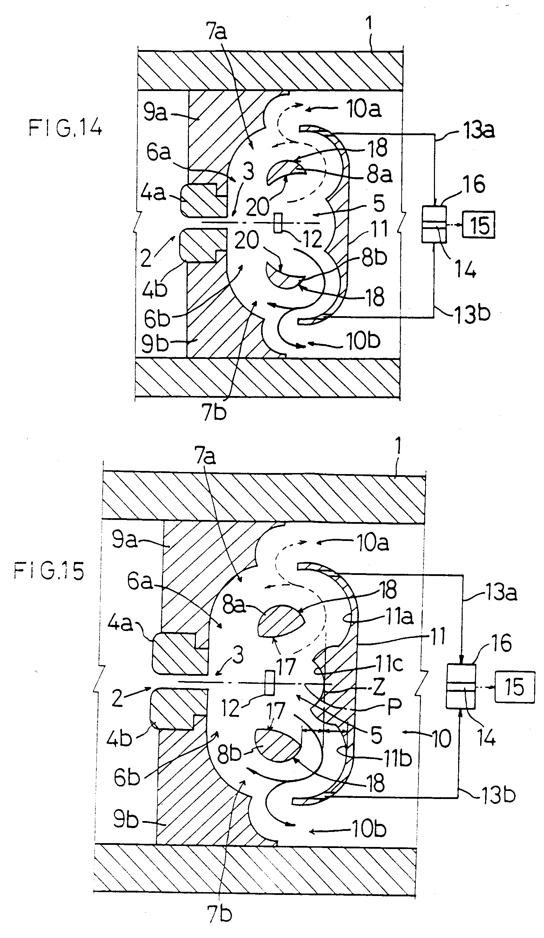

Further, as shown in Fig. 14, the outer peripheral faces may be formed by a concave large-curvature-radius curved face portion 20 facing the enlarged pipe portion 5 and the small-curvature-radius curved face portion 18 facing the return flow passages 7a and 7b and the control nozzles 6a and 6b. The flat face portion 19 may be formed with a slight curve; or may be formed differently depending on the convenience. Also, the first partition walls 8a and 8b may be formed to be tubular.

The pipes 13a and 13b respectively communicating with the return flow passages 7a and 7b may be connected to the sealed case 16 disposed externally of the flowmeter. Also, the pressure sensor 14 may be arranged to detect a pressure variation at either of the return flow passages 7a and 7b. In this cases, the pressure sensor 14 may be disposed in either of the return flow passages 7a and 7b.

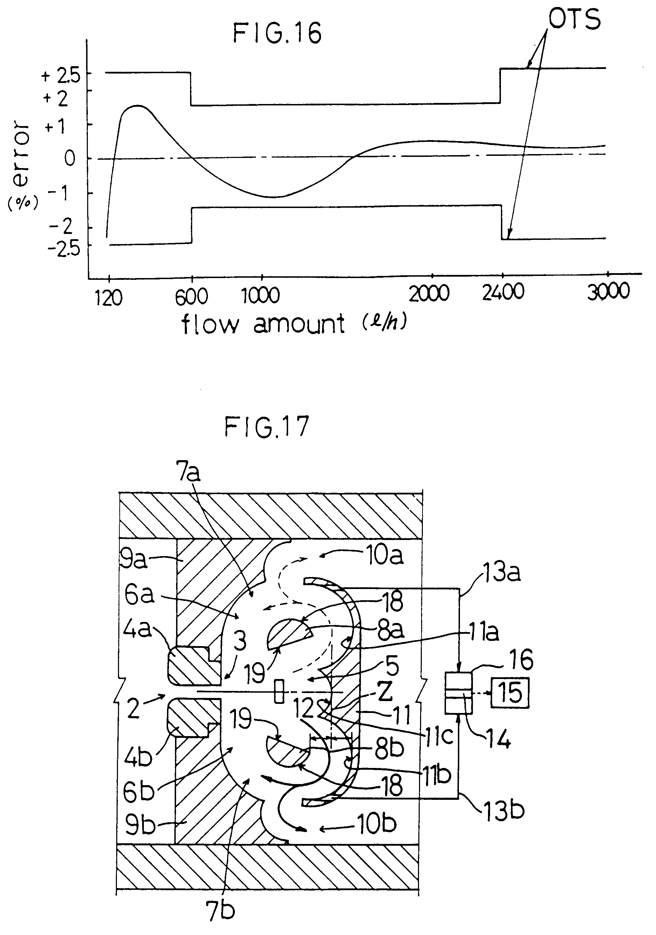

As for the configuration of the second partition wall 11, as shown in Figs. 15, 17 and 18, the partition wall 11 achieves the best effect if an innermost portion of its second curved face 11c is disposed at a position Z corresponding between a second partition wall 11a and the first partition wall 11a or 11b or substantially centrally of an innermost portion between the first partition wall 8a or 8b and the first curved face 11a or 11b the second partition wall 11a or 11b. That is to say, with this positional arrangement, as shown in Fig. 16, it becomes possible to restrict the measurement error to substantially zero in the large flow amount range exceeding 1,500 /h. As being apparent from comparison between Fig. 16 and Fig. 12, the flow amount measurement may be carried out further accurately for an even wider flow amount range with the improvement on the configuration of the second partition wall 11 combined with the improvement on the configuration of the first partition walls 8a and 8b.

Next, a fluidic flowmeter shown in Fig. 15 has a second partition wall 11 which construction will be particularly described hereinafter. This second partition wall 11 includes a pair of first curved faces 11a and 11b respectively facing leading ends of the return flow passages 7a and 7b and a second curved face 11c disposed between the pair of first curved faces 11a and 11b and facing the target 12, the first curved faces 11a and 11b and the second curved face 11c respectively having a partially cylindrical face configuration formed concave in the discharge direction of the discharge nozzle 3 and having central axes thereof substantially parallel with each other. The innermost portion of the second curved face 11c is disposed at the position Z corresponding to substantially the middle between the first partition wall 8a or 8b and the innermost portion of the first curved face 11a or 11b in the discharge direction of the discharge nozzle 3.

That is to say, through the improvements on the configurations of the first and second partition walls 8a, 8b and 11, as shown in Fig. 16, it becomes possible; for example, to restrict the error in a flow amount measurement within the OTS of ±2.5% for a home-use city-gas meter even if the measurement flow amount range is extended to e.g. 120 to 3,000 ℓ/h required of the gas meter of this type.

In combination with the above-described improvement on the second partition wall, the outer peripheral faces of the first partition walls 8a and 8b may be formed; as shown in Fig. 17 for example, by the flat face portion 19 facing the enlarged pipe portion 5 and the curved face portion 18 facing the return flow passages 7a and 7b and the control nozzles 6a and 6b.

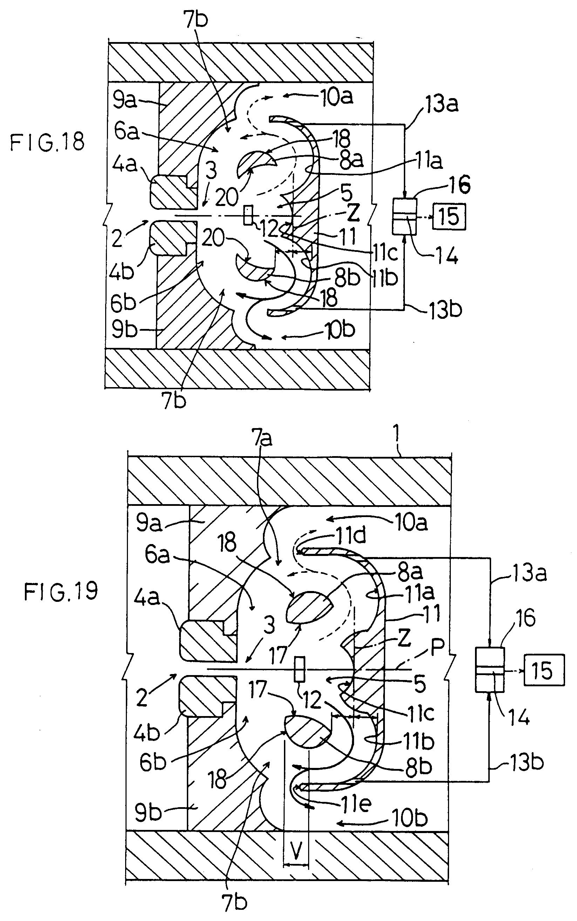

Or, as shown in Fig. 18, the outer peripheral faces may be formed by the concave large-curvature-radius curved face portion 20 facing the enlarged pipe portion 5 and the small-curvature-radius curved face portion 18 facing the return flow passages 7a and 7b and the control nozzles 6a and 6b. The flat face portion 19 may be formed with a slight curve; or may be formed differently depending on the convenience.

Also, in the above case, the first partition walls 8a and 8b may have a hollow tubular construction.

The configurations of the first and second curved faces 11a, 11b and 11c of the second partition wall 11 may be conveniently varied as long as the same comprise the substantially partially cylindrical faces. Further, the position of the second curved face 11c may be slightly displaced in the forward and backward direction from the position Z corresponding to the middle of the first partition wall 8a or 8b and the innermost portion of the second curved face 11a or 11b.

Also, it is more preferrable if the ends of the second partition wall 11 are formed as follows. For example, as shown in Fig. 19 and Figs. 21 and 22, the end portions 11d and 11e of the second partition wall 11 facing the inlet openings of the discharge passages 10a and 10b are respectively disposed within an area V corresponding to a half of the first partition walls 8a and 8b towards the discharge nozzle 3 side in the discharge direction of the discharge nozzle 3, such that the inlet openings of the discharge passages 10a and 10b may be disposed closer to the control nozzles 6a and 6b.

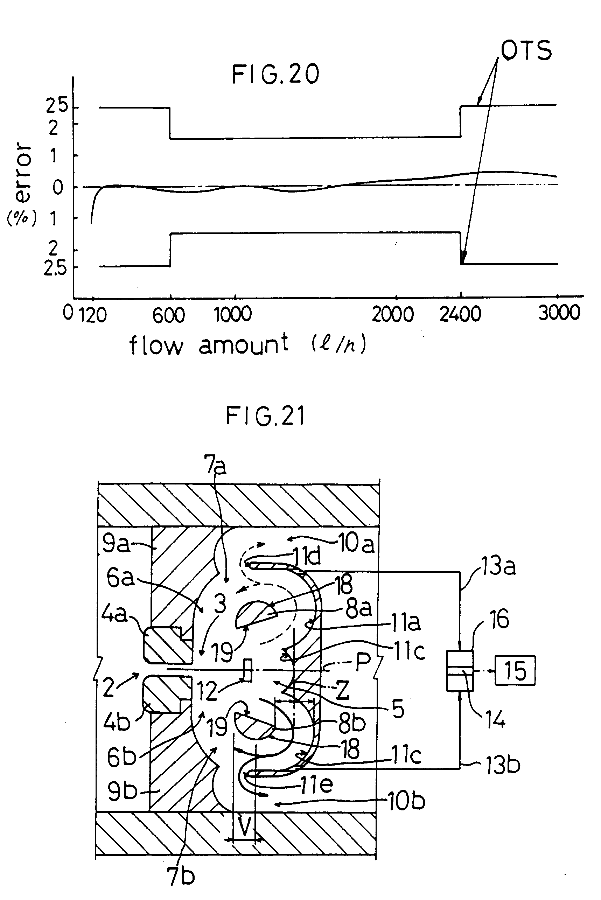

With this arrangement, as shown in Fig. 20, it is possible to effect a flow amount measurement with an error of less than ±1% over a wide measurement range of 120 to 3,000 ℓ/h. As being apparent from comparison between Fig. 20 and Fig. 16, if the improvements are effected on the disposition of the inlet openings of the discharge openings 10a and 10b in addition to the improvements on the configurations of the first and second partition walls 8a, 8b and 11, the flow amount measurement may be carried out more accurately and effectively.

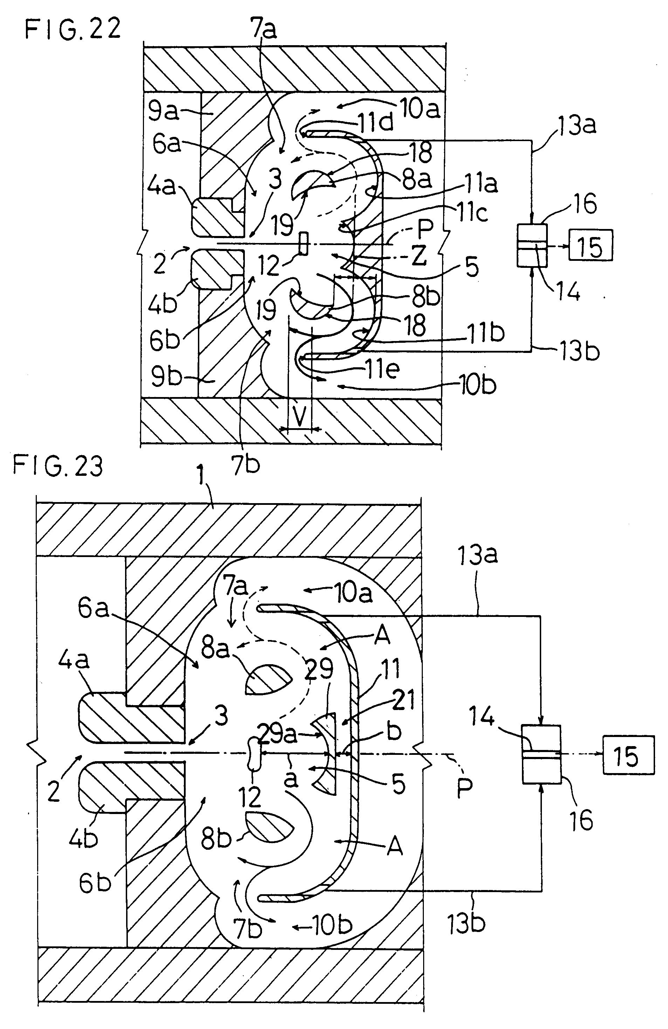

In combination with the improvement on the second partition wall, the outer peripheral faces of the first partition walls 8a and 8b may be formed; as shown in Fig. 21 for example, by the flat face portion 19 facing the enlarged pipe portion 5 and the curved face portion 18 facing the return flow passages 7a and 7b and the control nozzles 6a and 6b. Or, as shown in Fig. 22, the outer peripheral faces may be formed by the concave large-curvature-radius curved face portion 20 facing the enlarged pipe portion 5 and the small-curvature-radius curved face portion 18 facing the return flow passages 7a and 7b and the control nozzles 6a and 6b. The flat face portion 19 may be formed with a slight curve; or may be formed differently depending on the convenience. Also, the first partition walls 8a and 8b may have a hollow tubular construction, or the first partition walls 8a and 8b have substantially semicylindrical outer peripheral faces.

In this case also, the configurations of the first and second curved faces 11a, 11b and 11c of the second partition wall 11 may be conveniently varied as long as the same comprise the substantially partially cylindrical faces. Further, the position of the second curved face 11c may be slightly displaced in the forward and backward direction from the position Z corresponding to the middle of the first partition wall 8a or 8b and the innermost portion of the second partition wall 11a or 11b. Furthermore, the positions of the end portions 10d and 10b facing the inlet openings of the discharge passages 10a and 10b may be varied within the area V corresponding to the half of the first partition walls 8a and 8b at the side of the discharge nozzle 3.

Also, various improvements are possible on the configuration of the target 12.

For example, as shown in Figs 23 through 25, the target 12 may be formed such that its end faces 12a towards the first partition walls 8a and 8b have a semicylindrical or substantially semicylindrical configuration extending from a front face 12a to a back face 12c opposite to the front face 12a. This configuration is advantageous in that there will occur less disturbances in the flow at the downstream side of the target 12 and the linearity in the relationship between the discharged fluid amount and the flow direction thereof will improve and consequently the waveshape of the signals from the fluid measuring sensor will be less subjected to disturbances and the measurement error may be lessened.

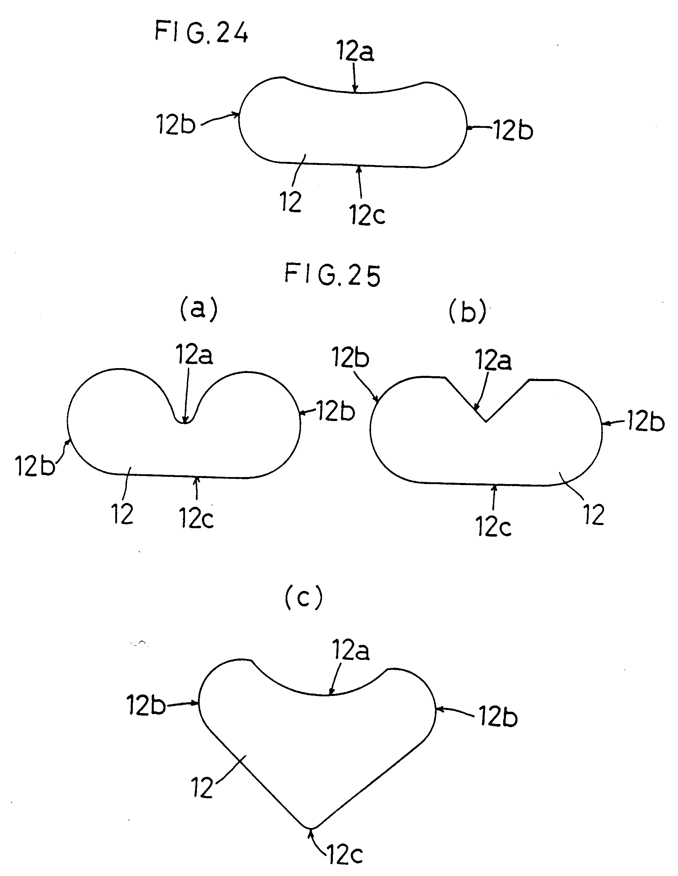

Incidentally, the configuration of the target 12 may be varied in many ways in addition to the ones shown in Figs. 23 and 24. For example, as shown in Figs. 25(a) and 25(b), the concave portion of the front face 12a may have different shapes. Or, as shown in Fig. 25(c), the back face 12c may be formed as a convex face gradually receding towards the center thereof. Further, it is also possible to form the end faces 12b as flat faces. With these targets also, it is possible to achieve the similar effect to that described hereinbefore.

Further, between the second partition wall 11 and the target 12, there may be provided a third partition wall 29 for forming inlet openings of the return flow passages 7a and 7b between the first partition walls 8a and 8b. Also, between the second partition wall 11 and the third partition wall 29, there is formed a communication passage 21 communicating between the return flow passages 7a and 7b. The front face 29a of the third partition wall 29 towards the target 12 is formed concave in the middle thereof facing the discharge direction of the discharge nozzle 3 relative to the ends thereof adjacent the first partition walls 8a and 8b. Preferably, an interdistance: a between the target 12 and the third partition wall 29 and an interdistance: b between the second partition wall 11 and the third partition wall 29 should have a relationship of: a : b = 2 : 1 to 5 : 1.

That is to say, when the fluid starts entering either of the return flow passages 7a, 7b with a change in the flow direction of the discharged flow from the discharge nozzle 3, the static fluid existing in the return flow passage 7a or 7b is smoothly forced by the incoming fluid into the communication passage 21 thereby not interferring with the incoming fluid. Accordingly, the incoming fluid may be smoothly flown into the discharge passage 10a or 10b, whereby delay in the signal transmission from the flow amount measuring sensor may be restricted and the measurement error may be minimized especially in the minute or large flow amount range.

Next, experiments were conducted for looking into the effect of the communication passage 21.

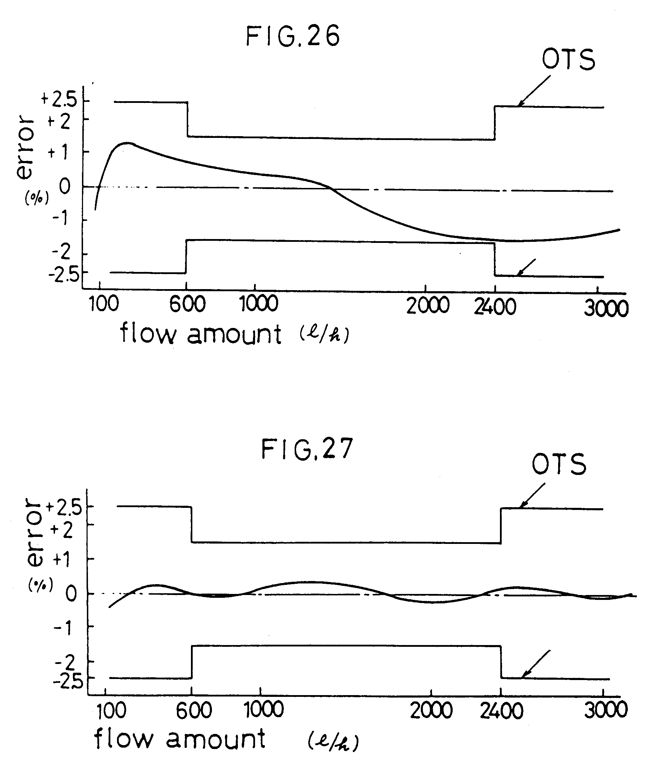

In the first experiment, the relationship between the measurement flow amount and the measurement error was checked with a fluidic flowmeter having the same target 12 as employed in the previous embodiment and having the third partition wall 29 and the second partition wall 11 formed togetherwith as one unit thereby eliminating the communication passage 17. The results are shown in Fig. 26.

As being apparent from comparison between Fig. 26 and Fig. 27, with the provision of the communication passage 21 shown in Fig. 23, it was found that this fluidic flowmeter is capable of effecting accurate flow amount measurement over a wide range extending between the maximum flow amount of 3,000 ℓ/h to the minimum flow amount of 100 ℓ/h with further reduced measurement error of less than ±0.5%. Accordingly, the communication passage 21 was proved to be very effective in eliminating error in the minute or large flow amount range.

On the other hand, in the case of the prior art flowmeter shown in Fig. 29, the measurement error in the flow amount range of 3,000 to 150 ℓ/h was more than 10% at its maximum in the minute flow amount range 150 to 300 ℓ/h as shown in Fig. 30. Thus, as being apparent from comparison between Fig. 27 and Fig. 30, according to the present invention, it is possible to effect accurate flow amount measurement of such minute flow amount even if the measurement flow amount range is significantly extended.

Although the fluidic flowmeter related to the present invention is designed mainly for fluel gas or water system for industrial and home use, it should be understood that its application is not limited thereto.

**Claims**

1. A fluidic flowmeter operating on the Coanda principle comprising:
   a reduced pipe portion (2), a discharge nozzle (3) and an enlarged pipe portion (5) disposed in series in said order in a fluid flow direction;
   a pair of control nozzles (6a, 6b) formed at the boundary between said discharge nozzle (3) and said enlarged pipe portion (5) and oriented substantially normal to the discharge direction of said discharge nozzle (3), said control nozzles facing each other;
   a pair of return flow passages (7a, 7b) defined between said respective control nozzles (6a, 6b) and downstream positions of said enlarged pipe portion (5);
   a target (12) for stabilizing switching of fluid flow direction mounted in said enlarged pipe portion (5);
   a sensor (14) for detecting variations in pressure or flow rate due to a variation in the flow direction of discharged fluid from said discharge nozzle (3);
   a pair of first partition walls (8a, 8b) mounted in said enlarged pipe portion (5) and a second partition wall (11) mounted to extend across the enlarged pipe portion (5) downstream of said first partition walls (8a, 8b), said first and second partition walls and the walls of the enlarged pipe portion together defining said control nozzles (6a, 6b) and said return flow passages (7a, 7b) said second partition wall (11) together with said first partition walls (8a, 8b) and the walls of said enlarged pipe portion (5) forming discharge passages (10a, 10b),

characterized in that

a front face (12a) of said target (12) directed towards said discharge nozzle (3) is positioned between a straight line (X) interconnecting center portions of outer peripheral faces of said first partition walls (8a, 8b) and a straight line (Y) interconnecting leading edges of said first partition walls (8a, 8b) at the side of said control nozzles (6a, 6b), said outer peripheral faces of said first partition walls (8a, 8b) are formed to be substantially semicylindrical, and the outer edges (11d, 11e) of first curbed faces (11a, 11b) of said second partition wall (11) helping to define the inlet openings of said discharge passages (10a, 10b) are extended at least to the locus of a straight line interconnecting between the downstream edges of said first partition walls (8a, 8b).

2. A fluidic flowmeter as defined in claim 1, characterized in that the inner faces of said first partition walls (8a, 8b) are either flat face portions (19) or curved face portions (17, 20) having a larger radius of curvature than that of the substantially semicylindrical outer peripheral faces (18).

3. A fluidic flowmeter as defined in claim 1 or 2, characterized in that said flow rate measuring sensor (14) is located within an area defined between:
a straight line (m) parallel with a discharge center axis (P) of said discharge nozzle (3) and passing through the outlet edge of said discharge nozzle (3), a straight line (n) parallel with a discharge center axis (P) of said discharge nozzle (3) contacting the inner faces of said first partition walls (8a, 8b), a straight line (Y) connecting the leading edges of said first partition walls (8a, 8b) and the downstream faces (B) of a wall defining said discharge nozzle (3).

4. A fluidic flowmeter as defined in any one of claims 1 through 3, characterized in that said pair of first curved faces (11a, 11b) of said second partition wall (11) face the starting ends of said return flow passages (7a, 7b) and said second curved face (11c) of said second partition wall (11) facing said target (12) between said first curved faces (11a, 11b) are all formed as substantially partially cylindrical concave faces of said second partition wall and center axes of said curved faces (11a, 11b and 11c) are disposed in substantially parallel with each other.

5. A fluidic flowmeter as defined in claim 4, characterized in that an innermost portion of said second curved face (11c) of said second partition wall (11) is disposed in a position (Z) corresponding substantially to half way between said first partition walls (8a, 8b) and half way between the innermost portions of said first curved faces (11a, 11b) of said second partition wall (11).

6. A fluidic flowmeter as defined in claim 5, characterized in that said respective outer edges (11d, 11e) of said second partition wall (11) helping to define the inlet openings of said discharge passages (10a, 10b) extend in an area (V) so as to overlap about a half of said first partition walls in the discharge direction of said discharge nozzle (3).

7. A fluidic flowmeter as defined in any one of claims 1 through 6, characterized in that said front face (12a) of said target (12) is formed concave in the middle thereof facing the discharge direction of said discharge nozzle (3) relative to lateral ends of said target (12) adjacent said first partition walls (8a, 8b).

8. A fluidic flowmeter as defined in claim 7, characterized in that end faces (12b) of said target (12) towards said first partition walls (8a, 8b) are formed as semicylindrical or substantially semicylindrical faces extending from said front face (12a) to a back face (12c) opposite to said front face (12a).

9. A fluidic flowmeter as defined in claim 8, characterized in that there is provided a third partition wall (29) disposed between said second partition wall (11) and said target (12) and helping to define the inlet openings of said return flow passages (7a, 7b) between said first partition walls (8a, 8b), there is provided a communication passage (21) between said second partition wall (11) and said third partition wall (29) said communication passage (21) communicating between said return flow passages (7a, 7b), and a front face (29a) of said third partition wall (29) towards said target (12) is formed concave in the middle thereof facing the discharge direction of said discharge nozzle (3) relative to the ends thereof adjacent said first partition walls (8a, 8b).

## Revendications

1. Un débitmètre fluidique fonctionnant selon les principes de l'effet Coanda et comprenant:

   - une partie de conduite de section réduite (2), une tuyère de décharge (3), et une partie (5) de conduite élargie disposées en série dans l'ordre précité, dans la direction d'écoulement d'un fluide;
   - une paire de tuyères de commande (6a et 6b) formées à la frontière entre ladite tuyère de décharge (3) et ladite partie (5) de conduite élargie et orientées de façon sensiblement normale à la direction de décharge de ladite tuyère de décharge (3), lesdites tuyères de commande se faisant réciproquement face;
   - une paire de passages (7a, 7b) d'écoulement en retour définis entre lesdites tuyères de commande homologues (6a et 6b) et les positions en aval de ladite partie (5) de conduite élargie;
   - une cible (12) montée dans ladite partie de conduite élargie pour stabiliser la commutation de la direction d'écoulement de fluide;
   - un capteur (14) pour détecter les variations de pression et de débit provoquées par un changement dans la direction d'écoulement du fluide évacué à partir de ladite tuyère de décharge (3);
   - une paire de premières parois de séparation (8a, 8b) montées dans ladite partie (5) de conduite élargie et une seconde paroi de séparation (11) montée pour s'étendre en au-travers de la partie de conduite élargie (5) en aval desdites premières parois de séparation (8a, 8b), lesdites premières et seconde parois de séparation et les parois de la partie de conduite élargie définissant conjointement lesdites tuyères de commande (6a, 6b) et lesdits passages (7a, 7b) de retour d'écoulement, ladite seconde paroi de séparation (11) associée auxdites premières parois de séparation (8a, 8b) et les parois de ladite partie de conduite élargie (5) formant des passages de décharge (10a, 10b),

   caractérisé en ce qu'une face frontale (12a) de ladite cible (12) dirigée vers ladite tuyère de décharge (3) est positionnée entre une ligne droite (X) reliant les parties de centre des faces périphériques extérieures desdites premières parois de séparation (8a, 8b) et une ligne droite (Y) reliant les bords d'attaque desdites premières parois de séparation (8a, 80) sur le côté desdites tuyères de commande (6a et 6b), en ce que lesdites faces périphériques extérieures desdites premières parois de séparation (8a, 8b) sont conformées en sorte qu'elles soient sensiblement semi-cylindriques et en ce que les bords extérieurs (11d, 11e) des premières faces incurvées (11a, 11b) de ladite seconde paroi de séparation (11) servant à définir les orifices d'entrée desdits passages d'évacuation (10a, 10b) sont prolongés au moins jusqu'à l'emplacement d'une ligne droite reliant les bords aval desdites premières parois de séparation (8a, 8b).

2. Un débitmètre fluidique selon la revendication 1, caractérisé en ce que les faces intérieures desdites premières parois de séparation (8a, 8b) sont soit des parties à face plane (19, soit des parties à face courbe (17, 20) présentant un rayon de courbure supérieur à celui des faces périphériques extérieures sensiblement semi-cylindriques (18).

3. Un débitmètre fluidique tel que défini dans la revendication 1 ou la revendication 2, caractérisé en ce que ledit capteur (14) mesurant le débit est situé à l'intérieur d'une aire définie entre: une ligne droite (m) parallèle à un axe central de décharge (P) de ladite tuyère de décharge (3) et passant au travers du bord de sortie de ladite tuyère de décharge (3), une ligne droite (n) parallèle à l'axe central de décharge (P) de ladite tuyère de décharge (3) venant en contact avec les faces internes desdites premières parois de séparation (8a, 8b), une ligne droite (Y) reliant les bords d'attaque desdites premières parois de séparation (8a, 8b) et les faces aval (B) d'une paroi définissant ladite tuyère de décharge (3).

4. Un débitmètre fluidique tel que défini dans l'une quelconque des revendications 1 à 3, caractérisé en ce que ladite paire de premières faces courbes (11a, 11b) de ladite seconde paroi de séparation (11) fait face aux extrémités de départ desdits passages (7a, 7b) de retour d'écoulement et ladite seconde face courbe (11c) de ladite seconde paroi de séparation (11) qui fait face à ladite cible (12) entre lesdites premières faces courbes (11a, 11b) sont toutes formées comme des faces concaves partiellement et sensiblement cylindriques de ladite seconde paroi de séparation et en ce que les axes centraux desdites faces courbes (11a, 11b et 11c) sont disposés de façon à être sensiblement parallèles entre eux.

5. Un débitmètre fluidique tel que défini à la revendication 4, caractérisé en ce que la partie la plus intérieure de ladite seconde face courbe (11c) de ladite seconde paroi (11) de séparation est disposée à un emplacement (Z) qui correspond sensiblement à une distance située à mi-chemin entre lesdites premières parois de séparation (8a, 8b) et à mi-chemin entre les parties les plus internes desdites premières faces courbes (11a, 11b) de ladite seconde paroi de séparation (11).

6. Un débitmètre fluidique tel que défini à la revendication 5, caractérisé en ce que lesdits bords extérieurs respectifs (11d, 11e) de ladite seconde paroi de séparation (11) servant à définir les ouvertures d'entrée desdits passages de décharge (10a, 10b) s'étendent dans une surface (V) de manière à recouvrir environ une moitié desdites premières parois de séparation dans la direction d'évacuation de ladite tuyère de décharge (3).

7. Un débitmètre fluidique tel que défini dans l'une quelconque des revendications 1 à 6, caractérisé en ce que ladite face frontale (12a) de ladite cible (12) est réalisée de façon concave en son milieu, de façon à faire face à la direction de décharge de ladite tuyère de décharge (3) par rapport aux extrémités latérales de ladite cible (12) est adjacente auxdites parois de séparation (8a, 8b).

8. Un débitmètre fluidique tel que défini dans la revendication 7, caractérisé en ce que les faces d'extrémité (12b) de ladite cible (12) qui sont dirigées vers lesdits premières parois de séparation (8a, 8b) sont formées comme des faces semi-cylindriques ou sensiblement semi-cylindriques tout en s'étendant de ladite face frontale (12a) vers une face arrière (12c) qui est opposée à ladite face frontale (12a).

9. Un débitmètre fluidique tel que défini à la revendication 8, caractérisé en ce qu'il est prévu une troisième paroi de séparation (29) disposée entre ladite seconde paroi de séparation (11) et ladite cible (12) et servant à définir les orifices d'entrée desdits passages de retour d'écoulement (7a, 7b) entre lesdites premières parois de séparation (8a, 8b), en ce qu'il est prévu un passage de communication (21) entre ladite seconde paroi de séparation (11) et ladite troisième paroi de séparation (29), ledit passage de communication (21) réalisant la voie entre lesdits passages de retour d'écoulement (7a, 7b) et en ce que la face frontale (29a) de ladite troisième paroi de séparation (29) dirigée vers ladite cible (12) est formée concave en son milieu face à la direction d'évacuation de ladite tuyère de décharge (3) par rapport à ses extrémités adjacentes auxdites premières parois de séparation (8a, 8b).

**Patentansprüche**

1. Strömungstechnischer Durchflußmesser nach dem Coanda-Prinzip mit einem eingezogenen Rohrabschnitt (2), einer Strahldüse (3) und einem vergrößerten Rohrabschnitt (5), die hintereinander in der genannten Reihenfolge in einer Strömungsmittelfließrichtung angeordnet sind; einem Paar Steuerdüsen (6a, 6b), die an der Abgrenzung zwischen der Strahldüse (3) und dem vergrößerten Rohrabschnitt (5) ausgebildet und im wesentlichen normal zu der Ausströmrichtung der Strahldüse (3) ausgerichtet sind, wobei die Steuerdüsen einander zugewendet sind; einem Paar Rückflußdurchgänge (7a, 7b), die zwischen den jeweiligen Steuerdüsen (6a, 6b) und stromabwärts gelegenen Abschnitten des vergrößerten Rohrabschnitts (5) ausgebildet sind; einem in dem vergrößerten Rohrabschnitt (5) angeordneten Treibsattel (12) zum Stabilisieren des Wechselns der Strömungsmittelfließrichtung; einem Meßfühler (14) zum Ermitteln von Veränderungen des Druckes und der Strömungsgeschwindigkeit infolge einer Veränderung der Fließrichtung des von der Strahldüse (3) abgestrahlten Strömungsmittels; einem Paar erster Trennwände (8a, 8b), die in dem vergrößerten Rohrabschnitt (5) angeordnet sind, und einer zweiten Trennwand (11), die so angeordnet ist, daß sie sich über den vergrößerten Rohrabschnitt (5) stromabwärts der ersten Trennwände (8a, 8b) erstreckt, wobei die ersten und zweiten Trennwände und die Wände des vergrößerten Rohrabschnitts zusammen die Steuerdüsen (6a, 6b) und die Rückflußdurchgänge (7a, 7b) bilden, wobei die zweite Trennwand (11) zusammen mit den ersten Trennwänden (8a, 8b) und den Wänden des vergrößerten Rohrabschnitts (5) Abstrahldurchgänge (10a, 10b) bildet, dadurch gekennzeichnet, daß eine Vorderseite (12a) der Prallplatte (12), die der Strahldüse (3) zugewendet ist, zwischen einer geraden Linie (X), die Mittelabschnitte der äußeren Umfangsseiten der ersten Trennwände (8a, 8b) verbindet, und einer geraden Linie (Y), die Vorderkanten der ersten Trennwände (8a, 8b) an der Seite der Steuerdüsen (6a, 6b) verbindet, angeordnet ist, daß die äußeren Umfangsseiten der ersten Trennwände (8a, 8b) im wesentlichen halbzylindrisch ausgebildet sind und die Außenkanten (11d, 11e) erster gekrümmter Seiten (11a, 11b) der zweiten Trennwand (11), die dazu beitragen, die Einlaßöffnungen der Abstrahldurchgänge (10a, 10b) zu bilden, sich zumindest bis zu dem geometrischen Ort einer geraden Linie erstrecken, die die stromabwärts gelegenen Kanten der ersten Trennwände (8a, 8b) verbindet.

2. Strömungstechnischer Durchflußmesesr nach Anspruch 1, dadurch gekennzeichnet, daß die Innenseiten der ersten Trennwände (8a, 8b) entweder flache Seitenabschnitte (19) oder gekrümmte Seitenabschnitte (17, 20) sind, die einen größeren Krümmungsradius aufweisen als der der im wesentlichen halbzylindrischen äußeren Umfangsseiten (18).

3. Strömungstechnischer Durchflußmesser nach Anspruch 1 oder 2, dadurch gekennzeichnet, daß der Strömungsgeschwindigkeitsmeßfühler (14) in einem Bereich angeordnet ist, der abgegrenzt ist zwischen:
Einer geraden Linie (m), die parallel zu einer Abstrahlmittelachse (P) der Strahldüse (3) und durch die Auslaßkante der Strahldüse (39 verläuft, einer geraden Linie (n), die parallel zu einer Abstrahlmittelachse (P) der Strahldüse (3) verläuft und die Innenseiten der ersten Tennwände (8a, 8b) berührt, einer geraden Linie (Y), die die Vorderkanten der ersten Trennwände (8a, 8b) und die stromabwärts gelegenen Seiten (B) einer Wand verbindet, die die Strahldüse (3) begrenzt.

4. Strömungstechnischer Durchflußmesser nach einem der Ansprüche 1 bis 3, dadurch gekennzeichnet, daß das Paar erster gekrümmter Seiten (11a, 11b) der zweiten Trennwand (11) den Anfangsenden der Rückflußdurchgänge (7a, 7b) zugewendet ist und die zweite gekrümmte Seite (11c) der zweiten Trennwand (11), die der Prallplatte (12) zwischen den ersten gekrümmten Seiten (11a, 11b) zugewendet ist, als im wesentlichen teilzylindrische konkave Seiten der zweiten Trennwand ausgebildet sind und Mittelachsen der gekrümmten Seiten (11a, 11b, 11c) im wesentlichen parallel zueinander angeordnet sind.

5. Strömungstechnischer Durchflußmesser nach Anspruch 4, dadurch gekennzeichnet, daß ein innerster Abschnitt der zweiten gekrümmten Seite (11c) der zweiten Trennwand in einer Position (Z) angeordnet ist, die im wesentlichen der halben Entfernung zwischen den ersten Trennwänden (8a, 8b) und der halben Entfernung zwischen den innersten Abschnitten der ersten gekrümmten Seiten (11a, 11b) der zweiten Trennwand (11) entspricht.

6. Strömungstechnischer Durchflußmesser nach Anspruch 5, dadurch gekennzeichnet, daß die jeweiligen Außenkanten (11d, 11e) der zweiten Trennwand (11), die dazu beitragen, die Einlaßöffnungen der Abstrahldurchgänge (10a, 10b) zu bilden, sich dergestalt in einem Bereich (V) erstrecken, daß sie etwa eine Hälfte der ersten Trennwände in der Abstrahlrichtung der Strahldüse (3) überlappen.

7. Strömungstechnischer Durchflußmesser nach einem der Ansprüche 1 bis 6, dadurch gekennzeichnet, daß die Vorderseite (12a) der Prallplatte (12) in ihrer Mitte konkav geformt ist und der Abstrahlrichtung der Strahldüse (3) bedingt durch die den ersten Trennwänden (8a, 8b) naheliegenden seitlichen Enden der Prallplatte (12) zugewendet ist.

8. Strömungstechnischer Durchflußmesser nach Anspruch 7, dadurch gekennzeichnet, daß zu den ersten Trennwänden (8a, 8b) hin gelegene Endseiten (12b) der Prallplatte (12) als halbzylindrische oder im wesentlichen halbzylindrische Seiten ausgebildet sind, die sich von der Vorderseite (12a) zu einer Rückseite (12c) gegenüber der Vorderseite (12a) erstrecken.

9. Strömungstechnischer Durchflußmesser nach Anspruch 8, dadurch gekennzeichnet, daß eine dritte Trennwand (29) vorgesehen ist, die zwischen der zweiten Trennwand (11) und der Prallplatte (12) angeordnet ist und dazu beiträgt, die Einlaßöffnungen der Rückflußdurchgänge (7a, 7b) zwischen den ersten Trennwänden (8a, 8b) abzugrenzen, daß ein Verbindungsdurchgang (21) zwischen der zweiten Trennwand (11) und der dritten Trennwand (29) vorgesehen ist, wobei der Verbindungsdurchgang (21) die Rückflußdurchgänge (7a, 7b) verbindet, und eine Vorderseite (29a) der dritten Trennwand (29) zur Prallplatte (12) hin in ihrer Mitte konkav geformt ist und der Abstrahlrichtung der Strahldüse (3) bedingt durch ihre den ersten Trennwänden (8a, 8b) naheliegenden Enden zugewendet ist.

FIG.1

FIG.2

OTS

$+2.5$
$+2$
$+1$
$0$
$-1$
$-2$
$-2.5$

error (%)

$150$          $1500$          $3000$

flow amount ($l$/h)

FIG. 3

FIG.4

FIG.5

SEC

FIG.6

SEC

FIG.7

SEC

FIG.8

FIG.9

FIG.10

FIG.11

FIG.12

flow amount (ℓ/ℓ)

FIG.13

FIG.14

FIG.15

# FIG.16

# FIG.17

EP 0 295 623 B1

FIG.18

FIG.19

20

FIG.20

FIG.21

FIG. 22

FIG. 23

FIG.24

FIG.25

(a)                    (b)

(c)

FIG.26

FIG.27

## FIG.28(PRIOR ART)

## FIG.29(PRIOR ART)

flow amount (ℓ/h)